# EUROPEAN PATENT SPECIFICATION

(11) **EP 2 813 478 B1**
(45) Date of publication and mention of the grant of the patent: **27.05.2020**
(21) Application number: 13746987.0
(22) Date of filing: 08.02.2013
(51) Int. Cl.: C03C 27/12, B32B 17/10, C08K 3/22, C08K 5/3417, C08L 29/14, C08L 101/00

(54) **INTERMEDIATE FILM FOR LAMINATED GLASS, AND LAMINATED GLASS**
ZWISCHENFOLIE FÜR VERBUNDGLAS UND VERBUNDGLAS
FILM INTERMÉDIAIRE DESTINÉ À DU VERRE STRATIFIÉ ET VERRE STRATIFIÉ

(30) Priority: 10.02.2012 JP 2012027769; 28.12.2012 JP 2012286787
(43) Date of publication of application: 17.12.2014
(73) Proprietor: Sekisui Chemical Co., Ltd., Osaka 530-8565 (JP)
(72) Inventor: II, Daizou, Kouka-shi Shiga 528-8585 (JP); FUKATANI, Juichi, Kouka-shi Shiga 528-8585 (JP); NAKAYAMA, Kazuhiko, Kouka-shi Shiga 528-8585 (JP); TSUNODA, Ryuta, Kouka-shi Shiga 528-8585 (JP)
(74) Representative: Ter Meer Steinmeister & Partner
(86) International application number: PCT/JP2013/053135
(87) International publication number: WO 2013/118890

(56) References cited:
- WO-A1-2009/054051
- WO-A1-2011/024787
- WO-A1-2011/040444
- WO-A1-2012/026487
- JP-A- 2008 194 563
- US-A1- 2007 256 782

## Description

### TECHNICAL FIELD

The present invention relates to an interlayer film for laminated glass used for laminated glass of automobiles, buildings and the like. Moreover, the present invention relates to laminated glass using the interlayer film for laminated glass.

### BACKGROUND ART

Since laminated glass generates only a small amount of scattering glass fragments even when subjected to external impact and broken, laminated glass is excellent in safety. As such, the laminated glass is widely used for automobiles, railway vehicles, aircraft, ships, buildings and the like. The laminated glass is produced by sandwiching an interlayer film for laminated glass between a pair of glass plates. Such laminated glass used for the opening part of vehicles and buildings is required to have high heat shielding properties.

The energy amount of an infrared ray with a wavelength of 780 nm or more which is longer than that of visible light is small compared to an ultraviolet ray. However, the thermal action of infrared rays is large, and when infrared rays are absorbed into a substance, heat is released from the substance. As such, infrared rays are generally called heat rays. Thus, in order to enhance the heat shielding properties of laminated glass, it is necessary to sufficiently cut off infrared rays.

For effectively cutting off the infrared rays (heat rays), the following Patent Document 1 discloses an interlayer film including tin-doped indium oxide particles (ITO particles) or antimony-doped tin oxide particles (ATO particles). The following Patent Document 2 discloses an interlayer film including tungsten oxide particles. Moreover, Patent Document 1 describes that an interlayer film may include an oxidation inhibitor.
WO 2011/040444 A1 relates to an intermediate film for a laminated glass, which comprises a thermoplastic resin, a plasticizer, heat-shielding particles, at least one component selected from a phthalocyanine compound, a naphthalocyanine compound and an anthracyanin compound, and a yellow dye.
US 2007/256782 A relates to bilayers that include cesium tungsten oxide as an infrared absorbing agent.

### RERATED ART DOCUMENT

### PATENT DOCUMENT

Patent Document 1: WO2001/025162A1
Patent Document 2: WO2005/087680A1

### SUMMARY OF THE INVENTION

### PROBLEM TO BE SOLVED BY THE INVENTION

Laminated glass using an interlayer film including heat shielding particles such as ITO particles, ATO particles and tungsten oxide particles is required to achieve both high heat shielding properties and high visible light transmittance (Visible Transmittance) at the same time. That is, with regard to the laminated glass, it is necessary to enhance the heat shielding properties while maintaining the visible light transmittance high. Furthermore, it has been demanded to allow high visible light transmittance to be maintained over a long period of time.

However, there are cases where high heat shielding properties and high visible light transmittance cannot be achieved at the same time by the conventional laminated glass such as those described in Patent Documents 1 and 2.

Moreover, with regard to the conventional interlayer film for laminated glass, when sunlight is made incident through laminated glass using the interlayer film, a person positioned on the inner side of the laminated glass is easily allowed to appreciably have a feeling of scorching hot caused by sunlight.

An object of the present invention is to provide an interlayer film for laminated glass which is capable of effectively enhancing the heat shielding properties and enhancing the visible light transmittance, and laminated glass using the interlayer film for laminated glass.

An object of the present invention with limitation is to provide an interlayer film for laminated glass which is capable of effectively enhancing the heat shielding properties and enhancing the visible light transmittance, and furthermore, capable of suppressing a person positioned on the inner side of the laminated glass to have a feeling of scorching hot due to the stimulation of sunlight when sunlight is made incident through the laminated glass using the interlayer film, and laminated glass using the interlayer film for laminated glass.

### MEANS FOR SOLVING THE PROBLEM

The present invention provides an interlayer film for laminated glass including a thermoplastic resin, tin-doped indium oxide particles, tungsten oxide particles and at least one kind of compound among a phthalocyanine compound, a naphthalocyanine compound and an anthracyanine compound, wherein the tungsten oxide particles are cesium-doped tungsten oxide particles.

In a specific aspect of the interlayer film for laminated glass according to the present invention, the content of the tin-doped indium oxide particles is 0.0001% by weight or more and 1% by weight or less.

In another specific aspect of the interlayer film for laminated glass according to the present invention, the content of the tungsten oxide particles is 0.00001% by weight or more and 0.1% by weight or less.

In a different specific aspect of the interlayer film for laminated glass according to the present invention, the content of the compound which is at least one kind among a phthalocyanine compound, a naphthalocyanine compound and an anthracyanine compound is 0.000001% by weight or more and 0.05% by weight or less.

In another specific aspect of the interlayer film for laminated glass according to the present invention, the compound which is at least one kind among a phthalocyanine compound, a naphthalocyanine compound and an anthracyanine compound is a phthalocyanine compound.

In a different specific aspect of the interlayer film for laminated glass according to the present invention, the compound which is at least one kind among a phthalocyanine compound, a naphthalocyanine compound and an anthracyanine compound is a phthalocyanine compound containing a vanadium atom.

In another specific aspect of the interlayer film for laminated glass according to the present invention, the thermoplastic resin is a polyvinyl acetal resin.

In yet another specific aspect of the interlayer film for laminated glass according to the present invention, a plasticizer is included.

In a different specific aspect of the interlayer film for laminated glass according to the present invention, an ultraviolet ray shielding agent is included.

In a different specific aspect of the interlayer film for laminated glass according to the present invention, at least one kind of metal salt among an alkali metal salt and an alkaline earth metal salt is included.

The laminated glass according to the present invention is provided with a first component for laminated glass, a second component for laminated glass and an interlayer film for laminated glass described above, wherein the interlayer film for laminated glass is interposed between the first component for laminated glass and the second component for laminated glass.

### EFFECT OF THE INVENTION

Since the interlayer film for laminated glass according to the present invention includes a thermoplastic resin, tin-doped indium oxide particles, tungsten oxide particles and at least one kind of compound among a phthalocyanine compound, a naphthalocyanine compound and an anthracyanine compound, it is possible to effectively enhance the heat shielding properties and enhance the visible light transmittance.

### BRIEF DESCRIPTION OF THE DRAWINGS

FIG. 1 is a partially cutout cross-sectional view showing laminated glass using the interlayer film for laminated glass in accordance with one embodiment of the present invention.
FIG. 2 is a partially cutout cross-sectional view showing another example of laminated glass using the interlayer film for laminated glass in accordance with one embodiment of the present invention.

### MODE FOR CARRYING OUT THE INVENTION

Hereinafter, the details of the present invention will be described.

The interlayer film for laminated glass according to the present invention includes a thermoplastic resin, tin-doped indium oxide particles, tungsten oxide particles and at least one kind of compound among a phthalocyanine compound, a naphthalocyanine compound and an anthracyanine compound, wherein the tungsten oxide particles are cesium-doped tungsten oxide particles. Hereinafter, at least one kind of compound among a phthalocyanine compound, a naphthalocyanine compound and an anthracyanine compound is sometimes referred to as Compound X.

Since the interlayer film for laminated glass according to the present invention has a composition described above, in the case where the film is used for constituting laminated glass, it is possible to enhance the heat shielding properties of the resulting laminated glass.

Laminated glass using an interlayer film has hitherto been sometimes low in heat shielding properties and sometimes high in solar transmittance. Furthermore, with regard to the conventional laminated glass, there is a problem that achieving both low solar transmittance and high visible light transmittance (Visible Transmittance) at the same time is difficult.

In order to sufficiently enhance the heat shielding properties and the visible light transmittance of laminated glass, in the present invention, the interlayer film includes a thermoplastic resin, tin-doped indium oxide particles, tungsten oxide particles and the Compound X. Using tin-doped indium oxide particles, tungsten oxide particles and the Compound X together greatly contributes to effectively enhancing the heat shielding properties of laminated glass. Furthermore, by the use of the interlayer film including tin-doped indium oxide particles, tungsten oxide particles and the Compound X, it is possible to obtain laminated glass that is low in solar transmittance, which is an index of heat shielding properties, and furthermore, it is possible to obtain laminated glass that is high in visible light transmittance mentioned above. For example, it is possible to allow the solar transmittance (Ts2100) in the 300 to 2100 nm wavelength range of laminated glass to be 65% or less and allow the visible light transmittance to be 65% or more. Furthermore, it is also possible to allow the solar transmittance (Ts2100) to be 50% or less, and moreover, it is also possible to allow the solar transmittance (Ts2100) to be 40% or less, and furthermore, it is possible to allow the visible light transmittance to be 70% or more.

As a result of researches, the present inventors have found that only by simply preparing laminated glass using an interlayer film including tungsten oxide particles or an interlayer film including tin-doped indium oxide particles, when sunlight is made incident through the laminated glass, a person positioned on the inner side of the laminated glass is easily allowed to appreciably have a feeling of scorching hot caused by sunlight.

Accordingly, as a result of researches, the present inventors have found a constitution of laminated glass capable of suppressing feeling of scorching hot caused by sunlight.

That is, the present inventors have also found that by adopting the composition including a thermoplastic resin, tin-doped indium oxide particles, tungsten oxide particles and the Compound X, when sunlight is made incident through the laminated glass using the interlayer film, it is possible to suppress a person positioned on the inner side of the laminated glass to have a feeling of scorching hot caused by sunlight. In this connection, in order to effectively suppress feeling of scorching hot, the light transmittance at a wavelength of 1550 nm of the laminated glass is preferably 20% or less, more preferably 10% or less.

Furthermore, due to the recent sophistication of automobiles, for example, incidental equipment such as sensors including a light sensor and a rain sensor and a CCD camera may be provided to a windshield. Moreover, with regard to an interlayer film for laminated glass used for buildings, various kinds of incidental equipment may be provided. In particular, as incidental equipment, on-board equipment performing control and the like by means of an infrared ray communication wave has been widely used. For example, a rain sensor detects the presence or absence of raindrops by allowing raindrops on the windshield to reflect an infrared ray at a wavelength of about 850 nm. Such an infrared ray communication wave used for control and the like of on-board equipment and the like is generally a near infrared ray at a wavelength of about 800 to 1000 nm.

In order to enhance the detection accuracy of such various sensors, it is preferred that the light transmittance at a wavelength of 850 nm of an interlayer film be 20% or more. Since the interlayer film for laminated glass according to the present invention includes a thermoplastic resin, tin-doped indium oxide particles, tungsten oxide particles and the Compound X, the light transmittance at a wavelength of 850 nm is high. As such, in the case where the laminated glass using the interlayer film for laminated glass according to the present invention is equipped with various sensors, it is possible to enhance the detection accuracy of various sensors.

Hereinafter, the details of materials constituting the interlayer film for laminated glass according to the present invention will be described.

### (Thermoplastic resin)

A thermoplastic resin included in the interlayer film for laminated glass according to the present invention is not particularly limited. As the thermoplastic resin, a conventionally known thermoplastic resin can be used. The thermoplastic resins may be used alone and may be used in combination of two or more thereof.

Examples of the thermoplastic resin include a polyvinyl acetal resin, an ethylene-vinyl acetate copolymer resin, an ethylene-acrylic copolymer resin, a polyurethane resin, a polyvinyl alcohol resin and the like. Thermoplastic resins other than these may be used.

It is preferred that the thermoplastic resin be a polyvinyl acetal resin. By using a polyvinyl acetal resin and a plasticizer together, it is possible to further enhance the adhesive force of the interlayer film for laminated glass according to the present invention to a component for laminated glass or another interlayer film for laminated glass.

For example, the polyvinyl acetal resin can be produced by acetalizing polyvinyl alcohol with aldehyde. For example, the polyvinyl alcohol can be produced by saponifying polyvinyl acetate. The saponification degree of the polyvinyl alcohol generally lies within the range of 70 to 99.8% by mole.

The average polymerization degree of the polyvinyl alcohol is preferably 200 or more, more preferably 500 or more, preferably 3500 or less, more preferably 3000 or less, and further preferably 2500 or less. When the average polymerization degree is not less than the above lower limit, the penetration resistance of the laminated glass is further enhanced. When the average polymerization degree is not more than the above upper limit, molding of the interlayer film is facilitated.

The number of carbon atoms of the acetal group contained in the polyvinyl acetal resin is not particularly limited. The aldehyde used when the polyvinyl acetal resin is produced is not particularly limited. It is preferred that the number of carbon atoms of the acetal group in the polyvinyl acetal resin be 3 or 4. When the number of carbon atoms of the acetal group in the polyvinyl acetal resin is 3 or more, the glass transition temperature of the interlayer film is sufficiently lowered.

The aldehyde is not particularly limited. In general, as the aldehyde, an aldehyde with 1 to 10 carbon atoms is suitably used. Examples of the aldehyde with 1 to 10 carbon atoms include propionaldehyde, n-butyraldehyde, isobutyraldehyde, n-valeraldehyde, 2-ethylbutyraldehyde, n-hexyl aldehyde, n-octyl aldehyde, n-nonyl aldehyde, n-decyl aldehyde, formaldehyde, acetaldehyde, benzaldehyde and the like. Of these, preferred is propionaldehyde, n-butyraldehyde, isobutyraldehyde, n-hexyl aldehyde or n-valeraldehyde, more preferred is propionaldehyde, n-butyraldehyde or isobutyraldehyde, and further preferred is n-butyraldehyde. The aldehydes may be used alone and may be used in combination of two or more thereof.

The content ratio of the hydroxyl group (the amount of hydroxyl groups) of the polyvinyl acetal resin is preferably 15% by mole or more, more preferably 18% by mole or more, preferably 40% by mole or less, and more preferably 35% by mole or less. When the content ratio of the hydroxyl group is not less than the above lower limit, the adhesive force of the interlayer film is further enhanced. Moreover, when the content ratio of the hydroxyl group is not more than the above upper limit, the flexibility of the interlayer film is enhanced and the handling of the interlayer film is facilitated.

The content ratio of the hydroxyl group of the polyvinyl acetal resin is a value expressing the mole fraction determined by dividing the amount of ethylene groups to which the hydroxyl group is bonded by the total amount of ethylene groups in the main chain in terms of percentage. For example, the amount of ethylene groups to which the hydroxyl group is bonded can be measured in accordance with JIS K6726 "Testing methods for polyvinyl alcohol" or in accordance with ASTM D1396-92 to be determined.

The acetylation degree (the amount of acetyl groups) of the polyvinyl acetal resin is preferably 0.1% by mole or more, more preferably 0.3% by mole or more, further preferably 0.5% by mole or more, preferably 30% by mole or less, more preferably 25% by mole or less, and further preferably 20% by mole or less. When the acetylation degree is not less than the above lower limit, the compatibility between the polyvinyl acetal resin and a plasticizer is enhanced. When the acetylation degree is not more than the above upper limit, the moisture resistance of the interlayer film and laminated glass is enhanced.

The acetylation degree is a value expressing the mole fraction determined by dividing a value obtained by subtracting the amount of ethylene groups to which the acetal group is bonded and the amount of ethylene groups to which the hydroxyl group is bonded from the total amount of ethylene groups in the main chain by the total amount of ethylene groups in the main chain in terms of percentage. For example, the amount of ethylene groups to which the acetal group is bonded can be measured in accordance with JIS K6728 "Testing methods for polyvinyl butyral" or in accordance with ASTM D1396-92.

The acetalization degree of the polyvinyl acetal resin (the butyralization degree in the case of a polyvinyl butyral resin) is preferably 60% by mole or more, more preferably 63% by mole or more, preferably 85% by mole or less, more preferably 75% by mole or less, and further preferably 70% by mole or less. When the acetalization degree is not less than the above lower limit, the compatibility between the polyvinyl acetal resin and a plasticizer is enhanced. When the acetalization degree is not more than the above upper limit, the reaction time required for producing the polyvinyl acetal resin is shortened.

The acetalization degree is a value expressing the mole fraction determined by dividing the amount of ethylene groups to which the acetal group is bonded by the total amount of ethylene groups in the main chain in terms of percentage.

The acetalization degree can be calculated by measuring the acetylation degree and the content ratio of the hydroxyl group by a method in accordance with JIS K6728 "Testing methods for polyvinyl butyral" or a method in accordance with ASTM D1396-92, calculating the mole fraction from the measurement results obtained, and then subtracting the acetylation degree and the content ratio of the hydroxyl group from 100% by mole.

In this connection, it is preferred that the content ratio of the hydroxyl group (the amount of hydroxyl groups), the acetalization degree (the butyralization degree) and the acetylation degree be calculated from the results measured by a method in accordance with JIS K6728 "Testing methods for polyvinyl butyral". In the case where the polyvinyl acetal resin is a polyvinyl butyral resin, it is preferred that the content ratio of the hydroxyl group (the amount of hydroxyl groups), the acetalization degree (the butyralization degree) and the acetylation degree be calculated from the results measured by a method in accordance with JIS K6728 "Testing methods for polyvinyl butyral".

Since the sound insulating properties of the laminated glass can be further enhanced, it is preferred that the polyvinyl acetal resin included in the interlayer film and a second layer (a second interlayer film) described below be a polyvinyl acetal resin with an acetylation degree of less than 8% by mole (hereinafter, sometimes referred to as "Polyvinyl acetal resin (A)") or a polyvinyl acetal resin with an acetylation degree of 8% by mole or more (hereinafter, sometimes referred to as "Polyvinyl acetal resin (B)"). The polyvinyl acetal resin included in the interlayer film and the second layer is preferably the Polyvinyl acetal resin (A) and is also preferably the Polyvinyl acetal resin (B).

The acetylation degree (a) of the Polyvinyl acetal resin (A) is less than 8% by mole, preferably 7.5% by mole or less, more preferably 7% by mole or less, further preferably 6% by mole or less, especially preferably 5% by mole or less, preferably 0.1% by mole or more, more preferably 0.5% by mole or more, even more preferably 0.8% by mole or more, further preferably 1% by mole or more, even further preferably 2% by mole or more, especially preferably 3% by mole or more, and most preferably 4% by mole or more. When the acetylation degree (a) is not more than the above upper limit and not less than the above lower limit, the compatibility between Polyvinyl acetal resin (A) and a plasticizer is further enhanced, and the sound insulating properties of the laminated glass are further enhanced.

The acetalization degree (a) of the Polyvinyl acetal resin (A) is preferably 68% by mole or more, more preferably 70% by mole or more, further preferably 71% by mole or more, especially preferably 72% by mole or more, preferably 85% by mole or less, more preferably 83% by mole or less, further preferably 81% by mole or less, and especially preferably 79% by mole or less. When the acetalization degree (a) is not less than the above lower limit, the sound insulating properties of the laminated glass are further enhanced. When the acetalization degree (a) is not more than the above upper limit, the reaction time required for producing the Polyvinyl acetal resin (A) can be shortened.

The content ratio (a) of the hydroxyl group of the Polyvinyl acetal resin (A) is preferably 30% by mole or less, more preferably 27.5% by mole or less, even more preferably 27% by mole or less, further preferably 26% by mole or less, even further preferably 25% by mole or less, especially preferably 24% by mole or less, most preferably 23% by mole or less, preferably 16% by mole or more, more preferably 18% by mole or more, further preferably 19% by mole or more, and especially preferably 20% by mole or more. When the content ratio (a) of the hydroxyl group is not more than the above upper limit, the sound insulating properties of the laminated glass are further enhanced. When the content ratio (a) of the hydroxyl group is not less than the above lower limit, the adhesive force of the interlayer film is further enhanced.

The acetylation degree (b) of the Polyvinyl acetal resin (B) is 8% by mole or more, preferably 9% by mole or more, more preferably 10% by mole or more, further preferably 11% by mole or more, especially preferably 12% by mole or more, preferably 30% by mole or less, more preferably 28% by mole or less, even more preferably 26% by mole or less, further preferably 24% by mole or less, especially preferably 20% by mole or less, and most preferably 19.5% by mole or less. When the acetylation degree (b) is not less than the above lower limit, the sound insulating properties of the laminated glass are further enhanced. When the acetylation degree (b) is not more than the above upper limit, the reaction time required for producing the Polyvinyl acetal resin (B) can be shortened. Above all, since the reaction time required for producing the Polyvinyl acetal resin (B) can be further shortened, it is preferred that the acetylation degree (b) of the Polyvinyl acetal resin (B) be less than 20% by mole.

The acetalization degree (b) of the Polyvinyl acetal resin (B) is preferably 50% by mole or more, more preferably 52.5% by mole or more, further preferably 54% by mole or more, especially preferably 60% by mole or more, preferably 80% by mole or less, more preferably 77% by mole or less, further preferably 74% by mole or less, and especially preferably 71% by mole or less. When the acetalization degree (b) is not less than the above lower limit, the sound insulating properties of the laminated glass are further enhanced. When the acetalization degree (b) is not more than the above upper limit, the reaction time required for producing the Polyvinyl acetal resin (B) can be shortened.

The content ratio (b) of the hydroxyl group of the Polyvinyl acetal resin (B) is preferably 30% by mole or less, more preferably 27.5% by mole or less, further preferably 27% by mole or less, especially preferably 26% by mole or less, most preferably 25% by mole or less, preferably 18% by mole or more, more preferably 20% by mole or more, further preferably 22% by mole or more, and especially preferably 23% by mole or more. When the content ratio (b) of the hydroxyl group is not more than the above upper limit, the sound insulating properties of the laminated glass are further enhanced. When the content ratio (b) of the hydroxyl group is not less than the above lower limit, the adhesive force of the interlayer film is further enhanced.

### (Plasticizer)

From the viewpoint of further enhancing the adhesive force of the interlayer film, it is preferred that the interlayer film for laminated glass according to the present invention include a plasticizer. In the case where the thermoplastic resin included in the interlayer film is a polyvinyl acetal resin, it is especially preferred that the interlayer film include a plasticizer.

The plasticizer is not particularly limited. As the plasticizer, a conventionally known plasticizer can be used. The plasticizers may be used alone and may be used in combination of two or more thereof.

Examples of the plasticizer include organic ester plasticizers such as a monobasic organic acid ester and a polybasic organic acid ester, organic phosphate plasticizers such as an organic phosphate plasticizer and an organic phosphite plasticizer, and the like. Of these, organic ester plasticizers are preferred. It is preferred that the plasticizer be a liquid plasticizer.

The monobasic organic acid ester is not particularly limited and examples thereof include a glycol ester obtained by the reaction of a glycol and a monobasic organic acid, an ester of triethylene glycol or tripropylene glycol and a monobasic organic acid, and the like. Examples of the glycol include triethylene glycol, tetraethylene glycol, tripropylene glycol and the like. Examples of the monobasic organic acid include butyric acid, isobutyric acid, caproic acid, 2-ethylbutyric acid, hepthylic acid, n-octylic acid, 2-ethylhexanoic acid, n-nonylic acid, decylic acid and the like.

The polybasic organic acid ester is not particularly limited and examples thereof include an ester compound of a polybasic organic acid and an alcohol having a linear or branched structure of 4 to 8 carbon atoms. Examples of the polybasic organic acid include adipic acid, sebacic acid, azelaic acid and the like.

The organic ester plasticizer is not particularly limited and examples thereof include triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, dibutyl sebacate, dioctyl azelate, dibutyl carbitol adipate, ethylene glycol di-2-ethylbutyrate, 1,3-propylene glycol di-2-ethylbutyrate, 1,4-butylene glycol di-2-ethylbutyrate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicapryate, dihexyl adipate, dioctyl adipate, hexyl cyclohexyl adipate, a mixture of heptyl adipate and nonyl adipate, diisononyl adipate, diisodecyl adipate, heptyl nonyl adipate, dibutyl sebacate, oil-modified sebacic alkyds, a mixture of a phosphoric acid ester and an adipic acid ester, and the like. Organic ester plasticizers other than these may be used.

The organic phosphate plasticizer is not particularly limited and examples thereof include tributoxyethyl phosphate, isodecyl phenyl phosphate, triisopropyl phosphate, and the like.

It is preferred that the plasticizer be a diester plasticizer represented by the following formula (1).

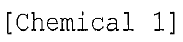

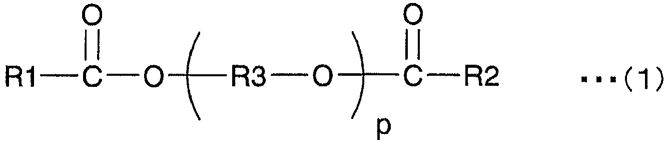

In the foregoing formula (1), R1 and R2 each represent an organic group with 5 to 10 carbon atoms, R3 represents an ethylene group, an isopropylene group or n-propylene group, and p represents an integer of 3 to 10. It is preferred that R1 and R2 in the foregoing formula (1) each be an organic group with 6 to 10 carbon atoms.

It is preferred that the plasticizer include at least one kind among triethylene glycol di-2-ethylhexanoate (3GO) and triethylene glycol di-2-ethylbutyrate (3GH), and it is more preferred that the plasticizer include triethylene glycol di-2-ethylhexanoate.

In the case where the interlayer film includes a plasticizer, the content of the plasticizer in the interlayer film including the thermoplastic resin and the plasticizer is not particularly limited. In the interlayer film including the thermoplastic resin and the plasticizer, relative to 100 parts by weight of the thermoplastic resin, the content of the plasticizer is preferably 25 parts by weight or more, more preferably 30 parts by weight or more, preferably 60 parts by weight or less, and more preferably 50 parts by weight or less. When the content of the plasticizer is not less than the above lower limit, the penetration resistance of the laminated glass is further enhanced. When the content of the plasticizer is not more than the above upper limit, the transparency of the interlayer film is further enhanced.

### (Compound X)

The interlayer film for laminated glass according to the present invention includes the Compound (Ingredient) X. The Compound X is at least one kind among a phthalocyanine compound, a naphthalocyanine compound and an anthracyanine compound. The Compound X is also a heat shielding ingredient. By using the tin-doped indium oxide particles, the tungsten oxide particles and the Compound X together in the whole interlayer film used for laminated glass, infrared rays (heat rays) can be effectively cut off.

The Compound X is not particularly limited. As the Compound X, a conventionally known phthalocyanine compound, naphthalocyanine compound and anthracyanine compound can be used. The Compounds X may be used alone and may be used in combination of two or more thereof.

Examples of the Compound X include phthalocyanine, a derivative of phthalocyanine, naphthalocyanine, a derivative of naphthalocyanine, anthracyanine, a derivative of anthracyanine, and the like. It is preferred that the phthalocyanine compound and the derivative of phthalocyanine each have a phthalocyanine skeleton. It is preferred that the naphthalocyanine compound and the derivative of naphthalocyanine each have a naphthalocyanine skeleton. It is preferred that the anthracyanine compound and the derivative of anthracyanine each have an anthracyanine skeleton.

From the viewpoint of further enhancing the heat shielding properties of the interlayer film and laminated glass, it is preferred that the Compound X be at least one kind selected from the group consisting of phthalocyanine, a derivative of phthalocyanine, naphthalocyanine and a derivative of naphthalocyanine, and it is more preferred that the Compound X be at least one kind among phthalocyanine and a derivative of phthalocyanine.

From the viewpoints of effectively enhancing the heat shielding properties and maintaining the visible light transmittance at a higher level over a long period of time, it is preferred that the Compound X contain a vanadium atom or a copper atom. It is preferred that the Compound X contain a vanadium atom and it is also preferred that the Compound X contain a copper atom. It is more preferred that the Compound X be at least one kind among phthalocyanine containing a vanadium atom or a copper atom and a derivative of phthalocyanine containing a vanadium atom or a copper atom. From the viewpoint of further enhancing the heat shielding properties of the interlayer film and laminated glass, it is preferred that the Compound X have a structural unit in which an oxygen atom is bonded to a vanadium atom. It is preferred that the Compound X be a phthalocyanine compound, and it is more preferred that the Compound X be a phthalocyanine compound containing a vanadium atom.

The content of the Compound X in the interlayer film which includes the Compound X is not particularly limited. In 100% by weight of the interlayer film which includes the Compound X, the content of the Compound X is preferably 0.000001% by weight or more, more preferably 0.00001% by weight or more, further preferably 0.001% by weight or more, especially preferably 0.002% by weight or more, preferably 0.05% by weight or less, more preferably 0.03% by weight or less, further preferably 0.01% by weight or less. When the content of Compound X in the interlayer film which includes the Compound X is not less than the above lower limit and not more than the above upper limit, the heat shielding properties can be sufficiently enhanced, the solar transmittance (Ts2100) can be sufficiently lowered, and the visible light transmittance can be sufficiently enhanced. For example, it is possible to allow the visible light transmittance to be 70% or more. Moreover, with regard to the color tone, it is possible to attain a color tone which is preferable as that of laminated glass.

### (Tin-doped indium oxide particles)

The tin-doped indium oxide particles (ITO particles) included in the interlayer film for laminated glass according to the present invention are heat shielding particles.

Since the shielding properties of heat rays can be sufficiently enhanced, it is preferred that the lattice constant of a crystal of the ITO particle lie within the range of 10.11 Å to 10.16 Å. In this connection, in general, the lattice constant of a crystal of an ITO particle is included within the range of 10.11 Å to 10.16 Å, and the lattice constant of a crystal of the ITO particle used in examples described below is also included within the range of 10.11 Å to 10.16 Å.

From the viewpoint of further enhancing the transparency and the heat shielding properties of laminated glass, the average particle diameter of the ITO particles is preferably 10 nm or more, more preferably 20 nm or more, preferably 100 nm or less, more preferably 80 nm or less, and further preferably 50 nm or less. When the average particle diameter is not less than the above lower limit, the shielding properties of heat rays are sufficiently enhanced. When the average particle diameter is not more than the above upper limit, the transparency of laminated glass is enhanced.

The "average particle diameter" refers to the volume average particle diameter. The average particle diameter can be measured using a particle size distribution measuring apparatus ("UPA-EX150" available from NIKKISO CO., LTD.), or the like.

In 100% by weight of the interlayer film which includes the ITO particles, the content of the ITO particles is preferably 0.0001% by weight or more, more preferably 0.001% by weight or more, especially preferably 0.05% by weight or more, preferably 1% by weight or less, more preferably 0.8% by weight or less, and further preferably 0.7% by weight or less. When the content of ITO particles in the interlayer film which includes the ITO particles is not less than the above lower limit and not more than the above upper limit, the heat shielding properties can be sufficiently enhanced, the solar transmittance (Ts2100) can be sufficiently lowered, and the feeling of scorching hot caused by sunlight is further suppressed. Moreover, the visible light transmittance can be sufficiently enhanced. With regard to the haze, it is possible to attain a haze which is preferable as that of laminated glass.

### (Tungsten oxide particles)

The tungsten oxide particles included in the interlayer film for laminated glass according to the present invention are heat shielding particles.

The tungsten oxide particles are generally represented by the following formula (X1) or the following formula (X2). In the interlayer film for laminated glass according to the present invention, the tungsten oxide particles represented by the following formula (X1) or the following formula (X2) are suitably used.

W_{y}O_{z} ... formula (X1)

In the foregoing formula (X1), W represents tungsten, O represents oxygen, and y and z satisfy the equation of 2.0 < z/y < 3.0.

MₓW_{y}O_{z} ... formula (X2)

In the foregoing formula (X2), M represents at least one kind of element selected from the group consisting of H, He, an alkali metal, an alkaline earth metal, a rare earth element, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta and Re, W represents tungsten, O represents oxygen, and x, y and z satisfy the equations of 0.001 ≤ x/y ≤ 1, and 2.0 < z/y ≤ 3.0.

From the viewpoint of further enhancing the heat shielding properties of the interlayer film and laminated glass, the tungsten oxide particles are cesium-doped tungsten oxide particles.

From the viewpoint of further enhancing the heat shielding properties of the interlayer film and laminated glass, cesium-doped tungsten oxide particles are especially preferred. From the viewpoint of still further enhancing the heat shielding properties of the interlayer film and laminated glass, it is preferred that the cesium-doped tungsten oxide particles be tungsten oxide particles represented by the formula: Cs_{0.33}WO₃.

The average particle diameter of the tungsten oxide particles is preferably 0.01 µm or more, more preferably 0.02 µm or more, preferably 0.1 µm or less, and more preferably 0.05 µm or less. When the average particle diameter is not less than the above lower limit, the shielding properties of heat rays is sufficiently enhanced. When the average particle diameter is not more than the above upper limit, the dispersibility of tungsten oxide particles is enhanced.

The "average particle diameter" refers to the volume average particle diameter. The average particle diameter can be measured using a particle size distribution measuring apparatus ("UPA-EX150" available from NIKKISO CO., LTD.), or the like.

The content of the tungsten oxide particles in the interlayer film which includes the tungsten oxide particles is not particularly limited. With regard to the interlayer film for laminated glass according to the present invention, in 100% by weight of the interlayer film which includes the tungsten oxide particles, the content of the tungsten oxide particles is preferably 0.00001% by weight or more and preferably 0.1% by weight or less. In 100% by weight of the interlayer film which includes the tungsten oxide particles, the content of the tungsten oxide particles is more preferably 0.0001% by weight or more, further preferably 0.0005% by weight or more, especially preferably 0.001% by weight or more, more preferably 0.06% by weight or less, further preferably 0.05% by weight or less, and especially preferably 0.04% by weight or less. When the content of the tungsten oxide particles is not less than the above lower limit and not more than the above upper limit, the heat shielding properties can be sufficiently enhanced, and the visible light transmittance can be sufficiently enhanced. For example, it is possible to allow the visible light transmittance of laminated glass to be 70% or more. Moreover, when the content of the tungsten oxide particles is not less than the above lower limit and not more than the above upper limit, the feeling of scorching hot caused by sunlight is further suppressed, and the detection accuracy of various sensors provided to laminated glass is further enhanced.

### (Ultraviolet ray shielding agent)

It is preferred that the interlayer film for laminated glass according to the present invention include an ultraviolet ray shielding agent. By the use of an ultraviolet ray shielding agent, even when the interlayer film and the laminated glass are used for a long period of time, the visible light transmittance becomes further difficult to be lowered. The ultraviolet ray shielding agents may be used alone and may be used in combination of two or more thereof.

Examples of the ultraviolet ray shielding agent include an ultraviolet ray absorber. It is preferred that the ultraviolet ray shielding agent be an ultraviolet ray absorber.

Examples of a common ultraviolet ray shielding agent which is heretofore widely known include a metal-based ultraviolet ray shielding agent, a metal oxide-based ultraviolet ray shielding agent, a benzotriazole-based ultraviolet ray shielding agent, a benzophenone-based ultraviolet ray shielding agent, a triazine-based ultraviolet ray shielding agent, a benzoate-based ultraviolet ray shielding agent, and the like.

Examples of the metal-based ultraviolet ray shielding agent include platinum particles, particles in which the surface of platinum particles is coated with silica, palladium particles, particles in which the surface of palladium particles is coated with silica, and the like. It is preferred that the ultraviolet ray shielding agent not be heat shielding particles. The ultraviolet ray shielding agent is preferably a benzotriazole-based ultraviolet ray shielding agent, a benzophenone-based ultraviolet ray shielding agent, a triazine-based ultraviolet ray shielding agent or a benzoate-based ultraviolet ray shielding agent, more preferably a benzotriazole-based ultraviolet ray shielding agent or a benzophenone-based ultraviolet ray shielding agent, and further preferably a benzotriazole-based ultraviolet ray shielding agent. Moreover, a benzotriazole-based ultraviolet ray absorber is preferred.

Examples of the metal oxide-based ultraviolet ray shielding agent include zinc oxide, titanium oxide, cerium oxide and the like. Furthermore, in the metal oxide-based ultraviolet ray shielding agent, the surface thereof may be coated with a coating material. Examples of the coating material for the surface of the metal oxide-based ultraviolet ray shielding agent include an insulating metal oxide, a hydrolyzable organosilicon compound, a silicone compound and the like.

Examples of the insulating metal oxide include silica, alumina, zirconia and the like. For example, the insulating metal oxide has a band-gap energy of 5.0 eV or more.

Examples of the benzotriazole-based ultraviolet ray shielding agent include benzotriazole-based ultraviolet ray shielding agents such as 2-(2'-hydroxy-5'-methylphenyl)benzotriazole ("Tinuvin P" available from BASF Japan Ltd.), 2-(2'-hydroxy-3',5'-di-t-butylphenyl)benzotriazole ("Tinuvin 320" available from BASF Japan Ltd.), 2-(2'-hydroxy-3'-t-butyl-5-methylphenyl)-5-chlorobenzotriaz ole ("Tinuvin 326" available from BASF Japan Ltd.) and 2-(2'-hydroxy-3',5'-di-amylphenyl)benzotriazole ("Tinuvin 328" available from BASF Japan Ltd.). It is preferred that the ultraviolet ray shielding agent be a benzotriazole-based ultraviolet ray shielding agent containing a halogen atom, and it is more preferred that the ultraviolet ray shielding agent be a benzotriazole-based ultraviolet ray shielding agent containing a chlorine atom, since they are excellent in ultraviolet ray shielding and absorbing performance (absorbing performance).

Examples of the benzophenone-based ultraviolet ray shielding agent include octabenzone ("Chimassorb 81" available from BASF Japan Ltd.) and the like.

Examples of the triazine-based ultraviolet ray shielding agent include "LA-F70" available from ADEKA CORPORATION, 2-(4,6-diphenyl-1,3,5-triazine-2-yl)-5-[(hexyl)oxy]-phenol ("Tinuvin 1577FF" available from BASF Japan Ltd.), and the like.

Examples of the benzoate-based ultraviolet ray shielding agent include 2,4-di-tert-butylphenyl-3,5-di-tert-butyl-4-hydroxybenzoate ("Tinuvin 120" available from BASF Japan Ltd.), and the like.

It is preferred that the interlayer film include an ultraviolet ray shielding agent having a maximum absorption wavelength on the longest wavelength side at a wavelength of less than 350 nm (hereinafter, sometimes referred to as Ultraviolet ray shielding agent Y). By allowing the Ultraviolet ray shielding agent Y to have a maximum absorption wavelength on the longest wavelength side at a wavelength of less than 350 nm, the shielding properties of ultraviolet rays can be effectively enhanced and the deterioration of tungsten oxide particles can be effectively suppressed. The lower limit of the maximum absorption wavelength on the longest wavelength side of the Ultraviolet ray shielding agent Y is not particularly limited as long as the function of shielding ultraviolet rays is exerted. The maximum absorption wavelength on the longest wavelength side of the Ultraviolet ray shielding agent Y is preferably 250 nm or more, more preferably 290 nm or more. The Ultraviolet ray shielding agents Y may be used alone and may be used in combination of two or more thereof.

The maximum absorption wavelength can be measured with a liquid containing 0.01% by weight of an ultraviolet ray shielding agent and 99.9% by weight of triethylene glycol di-2-ethylhexanoate, and for example, using a quartz cell (1 mm in cell length).

From the viewpoints of enhancing the shielding properties of ultraviolet rays and still further suppressing the lowering in visible light transmittance after the lapse of time, it is preferred that the Ultraviolet ray shielding agent Y contain a benzotriazole compound, a benzophenone compound, a triazine compound, a malonic acid ester compound or an anilide oxalate compound, and it is more preferred that the Ultraviolet ray shielding agent Y contain a triazine compound or a malonic acid ester compound. The Ultraviolet ray shielding agent Y preferably contains a benzotriazole compound, preferably contains a benzophenone compound, preferably contains a triazine compound, preferably contains a malonic acid ester compound, and preferably contains an anilide oxalate compound.

From the viewpoint of further suppressing the lowering in visible light transmittance after the lapse of time of the interlayer film and laminated glass, it is more preferred that the Ultraviolet ray shielding agent Y contain "LA-F70" available from ADEKA CORPORATION, 2-ethyl-2'-ethoxy-oxyanilide ("Sanduvor VSU" available from Clariant Japan K.K.), malonic acid[(4-methoxyphenyl)-methylene]-dimethyl ester ("Hostavin PR-25" available from Clariant Japan K.K.), or 2-[2-hydroxy-4-[(octyloxycarbonyl)ethylideneoxy]phenyl-4,6-di(4-phenyl)phenyl-1,3,5-triazine ("Tinuvin 479" available from BASF Japan Ltd.), and it is more preferred that the Ultraviolet ray shielding agent Y contain "LA-F70" available from ADEKA CORPORATION or malonic acid[(4-methoxyphenyl)-methylene]-dimethyl ester. The Ultraviolet ray shielding agent Y preferably contains "LA-F70" available from ADEKA CORPORATION, preferably contains 2-ethyl-2'-ethoxy-oxyanilide, preferably contains malonic acid[(4-methoxyphenyl)-methylene]-dimethyl ester, and preferably contains 2-[2-hydroxy-4-[(octyloxycarbonyl)ethylideneoxy]phenyl-4,6-di(4-phenyl)phenyl-1,3,5-triazine.

From the viewpoints of enhancing the shielding properties of ultraviolet rays and still further suppressing the lowering in visible light transmittance after the lapse of time, it is preferred that the interlayer film include a triazine compound and a malonic acid ester compound, it is more preferred that the interlayer film include "LA-F70" available from ADEKA CORPORATION and a malonic acid ester compound, and it is further preferred that the interlayer film include "LA-F70" available from ADEKA CORPORATION and malonic acid[(4-methoxyphenyl)-methylene]-dimethyl ester.

In the case where the interlayer film includes the ultraviolet ray shielding agent, the content of the ultraviolet ray shielding agent in the interlayer film which includes the ultraviolet ray shielding agent is not particularly limited. From the viewpoint of further suppressing the lowering in visible light transmittance after the lapse of time, in 100% by weight of the interlayer film which includes the ultraviolet ray shielding agent, the content of the ultraviolet ray shielding agent is preferably 0.1% by weight or more, more preferably 0.2% by weight or more, further preferably 0.3% by weight or more, especially preferably 0.5% by weight or more, preferably 2.5% by weight or less, more preferably 2% by weight or less, further preferably 1% by weight or less, and especially preferably 0.8% by weight or less. In particular, by allowing the content of the ultraviolet ray shielding agent in 100% by weight of the interlayer film which includes the ultraviolet ray shielding agent to be 0.2% by weight or more, the lowering in visible light transmittance of the interlayer film and laminated glass after the lapse of time can be significantly suppressed.

From the viewpoint of further suppressing the lowering in visible light transmittance after the lapse of time, in 100% by weight of the interlayer film which includes the ultraviolet ray shielding agent, the content of the Ultraviolet ray shielding agent Y is preferably 0.1% by weight or more, more preferably 0.2% by weight or more, further preferably 0.3% by weight or more, especially preferably 0.5% by weight or more, preferably 2.5% by weight or less, more preferably 2% by weight or less, further preferably 1% by weight or less, and especially preferably 0.8% by weight or less.

### (Oxidation inhibitor)

It is preferred that the interlayer film for laminated glass according to the present invention include an oxidation inhibitor. The oxidation inhibitors may be used alone and may be used in combination of two or more thereof.

Examples of the oxidation inhibitor include a phenol-based oxidation inhibitor, a sulfur-based oxidation inhibitor, a phosphorus-based oxidation inhibitor and the like. The phenol-based oxidation inhibitor is an oxidation inhibitor having a phenol skeleton. The sulfur-based oxidation inhibitor is an oxidation inhibitor containing a sulfur atom. The phosphorus-based oxidation inhibitor is an oxidation inhibitor containing a phosphorus atom.

It is preferred that the oxidation inhibitor be a phenol-based oxidation inhibitor or a phosphorus-based oxidation inhibitor.

Examples of the phenol-based oxidation inhibitor include 2,6-di-t-butyl-p-cresol (BHT), butylated hydroxyanisole (BHA), 2,6-di-t-butyl-4-ethylphenol, stearyl-β-(3,5-di-t-butyl-4-hydroxyphenyl)propionate, 2,2'-methylenebis-(4-methyl-6-butylphenol), 2,2'-methylenebis-(4-ethyl-6-t-butylphenol), 4,4'-butylidene-bis-(3-methyl-6-t-butylphenol), 1,1,3-tris-(2-methyl-hydroxy-5-t-butylphenyl)butane, tetrakis[methylene-3-(3',5'-butyl-4-hydroxyphenyl)propionat e]methane, 1,3,3-tris-(2-methyl-4-hydroxy-5-t-butylphenol)butane, 1,3,5-trimethyl-2,4,6-tris(3,5-di-t-butyl-4-hydroxybenzyl)b enzene, bis(3,3'-t-butylphenol)butyric acid glycol ester, bis(3-t-butyl-4-hydroxy-5-methylbenzenepropanoic acid)ethylenebis(oxyethylene), and the like. One kind or two or more kinds among these oxidation inhibitors are suitably used.

Examples of the phosphorus-based oxidation inhibitor include tridecyl phosphite, tris(tridecyl) phosphite, triphenyl phosphite, trinonylphenyl phosphite, bis(tridecyl)pentaerithritol diphosphite, bis(decyl)pentaerithritol diphosphite, tris(2,4-di-t-butylphenyl)phosphite, bis(2,4-di-t-butyl-6-methylphenyl)ethyl ester phosphorous acid, tris(2,4-di-t-butylphenyl)phosphite, 2,2'-methylenebis(4,6-di-t-butyl-1-phenyloxy) (2-ethylhexylo xy) phosphorus, and the like. One kind or two or more kinds among these oxidation inhibitors are suitably used.

Examples of a commercial product of the oxidation inhibitor include "Sumilizer BHT" available from Sumitomo Chemical Co., Ltd., "Irganox 1010" available from Nihon Ciba-Geigy K.K., and the like.

In the case where the interlayer film includes the oxidation inhibitor, in order to maintain high visible light transmittance of the interlayer film and laminated glass over a long period of time, in 100% by weight of the interlayer film which includes the oxidation inhibitor, the content of the oxidation inhibitor is preferably 0.1% by weight or more. Moreover, since an effect commensurate with the addition of an oxidation inhibitor is not attained, in 100% by weight of the interlayer film which includes the oxidation inhibitor, the content of the oxidation inhibitor is preferably 2.0% by weight or less.

From the viewpoint of further enhancing the heat shielding properties and the visible light transmittance of the interlayer film and laminated glass and the visible light transmittance after the lapse of time of the interlayer film and laminated glass, in 100% by weight of the interlayer film which includes the oxidation inhibitor, the content of the oxidation inhibitor is preferably 0.1% by weight or more. Moreover, in order to suppress the discoloration of the peripheral part due to the influence of the oxidation inhibitor, in 100% by weight of the interlayer film which includes the oxidation inhibitor, the content of the oxidation inhibitor is preferably 2% by weight or less, and more preferably 1.8% by weight or less.

### (Metal salt)

It is preferred that the interlayer film for laminated glass according to the present invention include at least one kind of metal salt (hereinafter, sometimes referred to as Metal salt M) among an alkali metal salt and an alkaline earth metal salt. By the use of the Metal salt M, controlling the adhesivity between a component for laminated glass and the interlayer film and the adhesivity between layers in the interlayer film is facilitated. Furthermore, by allowing the interlayer film to include the Metal salt M, the dispersibility of tungsten oxide particles is further improved, and as a result, the light resistance of the interlayer film is further enhanced, and high visible light transmittance can be maintained over a longer period of time. The Metal salts M may be used alone and may be used in combination of two or more thereof.

It is preferred that the Metal salt M contain at least one kind of metal selected from the group consisting of Li, Na, K, Rb, Cs, Mg, Ca, Sr and Ba. It is preferred that the Metal salt M be included in the interlayer film in the state of a metal ion, a hydrated metal ion, a metal complex ion, an inorganic salt of the metal or an organic acid ester of the metal. In the case of being present in the state of a metal ion, a hydrated metal ion or a metal complex ion, it is easy to control the adhesivity between a component for laminated glass and the interlayer film and the adhesivity between layers in the interlayer film. It is preferred that the metal salt included in the interlayer film contain at least one kind of metal among K and Mg.

Moreover, it is more preferred that the Metal salt M be an alkali metal salt of an organic acid with 2 to 16 carbon atoms or an alkaline earth metal salt of an organic acid with 2 to 16 carbon atoms, and it is further preferred that the Metal salt M be a magnesium carboxylate with 2 to 16 carbon atoms or a potassium carboxylate with 2 to 16 carbon atoms.

Although the magnesium carboxylate with 2 to 16 carbon atoms and the potassium carboxylate with 2 to 16 carbon atoms are not particularly limited, examples thereof include magnesium acetate, potassium acetate, magnesium propionate, potassium propionate, magnesium 2-ethylbutanoate, potassium 2-ethylbutanoate, magnesium 2-ethylhexanoate, potassium 2-ethylhexanoate, and the like.

In the case where the interlayer film includes Metal salt M, in the interlayer film which includes the Metal salt M, the content of Metal salt M as the content of the metal ion (for example, the magnesium concentration in the case of magnesium ions, and the potassium concentration in the case of potassium ions) is preferably 5 ppm or more, more preferably 10 ppm or more, further preferably 20 ppm or more, preferably 300 ppm or less, more preferably 250 ppm or less, and further preferably 200 ppm or less. When the content of Metal salt M is not less than the above lower limit and not more than the above upper limit, the adhesivity between a component for laminated glass and the interlayer film and the adhesivity between layers in the interlayer film can be further well controlled. Furthermore, when the content of the Metal salt M is not less than the above lower limit, the light resistance of the interlayer film is still further enhanced, and high visible light transmittance can be maintained over a further longer period of time.

### (Other ingredients)

The interlayer film for laminated glass according to the present invention may include additives such as a light stabilizer, a flame retardant, an antistatic agent, a pigment, a dye, an adhesive strength regulating agent, a moisture-resistance improving agent, a fluorescent brightening agent, an infrared ray absorber and the like, as necessary. These additives may be used alone or in combination of two or more thereof.

### (Interlayer film for laminated glass)

The thickness of the interlayer film for laminated glass according to the present invention is not particularly limited. From the viewpoint of the practical aspect and the viewpoint of sufficiently enhancing heat shielding properties, the thickness of the interlayer film is preferably 0.1 mm or more, more preferably 0.25 mm or more, preferably 3 mm or less, and more preferably 1.5 mm or less. When the thickness of the interlayer film is not less than the above lower limit, the penetration resistance of the laminated glass is enhanced.

The production method of the interlayer film for laminated glass according to the present invention is not particularly limited. As the production method of the interlayer film, a conventionally known method can be used. Examples thereof include a production method of kneading a thermoplastic resin, tin-doped indium oxide particles, tungsten oxide particles, the Compound X and other ingredients blended as necessary and molding an interlayer film, and the like. A production method of extrusion-molding is preferred because the method is suitable for continuous production.

The method for kneading is not particularly limited. Examples of this method include a method using an extruder, a plastograph, a kneader, a banbury mixer, a calender roll or the like. Of these, a method using an extruder is preferred and a method using a twin screw extruder is more preferred because the methods are suitable for continuous production.

### (Laminated glass)

The laminated glass according to the present invention is provided with a first component for laminated glass, a second component for laminated glass and an interlayer film sandwiched between the first component for laminated glass and the second component for laminated glass. The laminated glass may be provided with a single-layered interlayer film having a single-layered structure and may be provided with a multi-layered interlayer film having a two or more-layered structure. The laminated glass is provided with a single-layered or multi-layered interlayer film. The interlayer film in the laminated glass includes the interlayer film for laminated glass according to the present invention. Thus, the whole interlayer film in the laminated glass includes a thermoplastic resin, tin-doped indium oxide particles, tungsten oxide particles and the Compound X.

Considering from a different point of view, the laminated glass according to the present invention is provided with a first component for laminated glass, a second component for laminated glass and the interlayer film for laminated glass according to the present invention, wherein the interlayer film for laminated glass according to the present invention is interposed between the first component for laminated glass and the second component for laminated glass.

Thus, the interlayer film for laminated glass according to the present invention may be used alone as a single-layered interlayer film and may also be used as a multi-layered interlayer film by being layered together with other interlayer films. In the case of a multi-layered interlayer film, in a multi-layered interlayer film having a plurality of interlayer films (layers), an interlayer film (layer) including a thermoplastic resin, tin-doped indium oxide particles, tungsten oxide particles and the Compound X corresponds to the interlayer film for laminated glass according to the present invention.

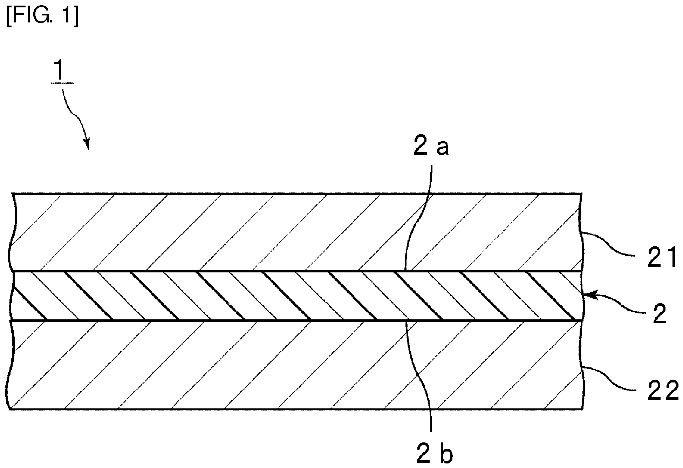

FIG. 1 shows an example of laminated glass using the interlayer film for laminated glass in accordance with one embodiment of the present invention represented as a cross-sectional view.

Laminated glass 1 shown in FIG. 1 is provided with an interlayer film 2, a first component for laminated glass 21 and the second component for laminated glass 22. The interlayer film 2 is a single-layered interlayer film. The interlayer film 2 includes a thermoplastic resin, tin-doped indium oxide particles, tungsten oxide particles and the Compound X. The interlayer film 2 is used for obtaining laminated glass. The interlayer film 2 is an interlayer film for laminated glass.

The interlayer film 2 is sandwiched between the first and second components for laminated glass 21 and 22. The first component for laminated glass 21 is layered on a first surface 2a (one surface) of the interlayer film 2. The second component for laminated glass 22 is layered on a second surface 2b (the other surface) opposite to the first surface 2a of the interlayer film 2.

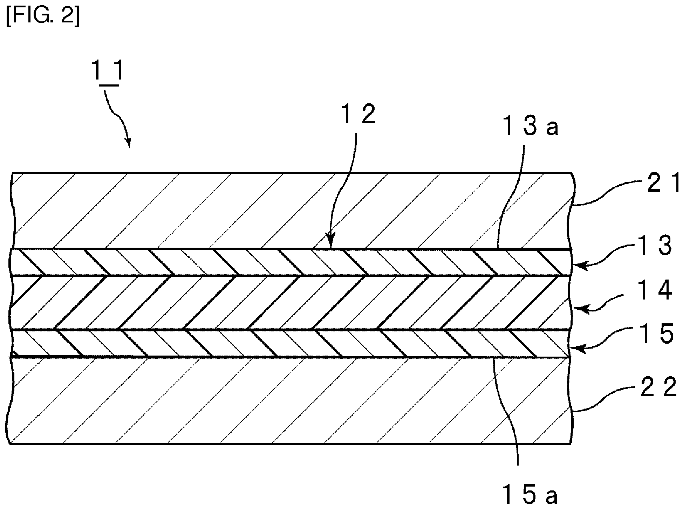

FIG. 2 shows another example of laminated glass using the interlayer film for laminated glass in accordance with another embodiment of the present invention represented as a cross-sectional view.

Laminated glass 11 shown in FIG. 2 is provided with an interlayer film 12 and first and second components for laminated glass 21 and 22. The interlayer film 12 is a multi-layered interlayer film. The interlayer film 12 has a structure in which three interlayer films, which are a first layer 13 (a first interlayer film), a second layer 14 (a second interlayer film) and a third layer 15 (a third interlayer film), are layered in this order. The whole interlayer film 12 includes a thermoplastic resin, tin-doped indium oxide particles, tungsten oxide particles and the Compound X. In the present embodiment, the second layer 14 is a heat shielding layer and includes a thermoplastic resin, tin-doped indium oxide particles, tungsten oxide particles and the Compound X. It is preferred that the second layer 14 include a thermoplastic resin. The second layer 14 may not include tin-doped indium oxide particles, may not include tungsten oxide particles, and may not include the Compound X. The first and third layers 13 and 15 are protective layers. It is preferred that the first and third layers 13 and 15 include a thermoplastic resin. The first and third layers 13 and 15 may include tin-doped indium oxide particles, may include tungsten oxide particles, and may include the Compound X. The interlayer film 12 is used for obtaining laminated glass. The interlayer film 12 is an interlayer film for laminated glass. In this connection, in the case where the first layer 13 or the third layer 14 includes a thermoplastic resin, tin-doped indium oxide particles, tungsten oxide particles and the Compound X, the second layer 14 may not include tin-doped indium oxide particles, may not include tungsten oxide particles, and may not include the Compound X.

The first, second and third layers 13, 14 and 15 each are interposed between the first and second components for laminated glass 21 and 22. The interlayer film 12 is sandwiched between the first and second components for laminated glass 21 and 22. The first component for laminated glass 21 is layered on an outer surface 13a of the first layer 13. The second component for laminated glass 22 is layered on an outer surface 15a of the second layer 15.

Examples of the first and second components for laminated glass (laminated glass constituent components) include a glass plate and a PET (polyethylene terephthalate) film and the like. As the laminated glass, laminated glass in which an interlayer film is sandwiched between a glass plate and a PET film or the like, as well as laminated glass in which an interlayer film is sandwiched between two glass plates, is included. Laminated glass is a laminate provided with a glass plate and it is preferred that at least one glass plate be used.

Examples of the glass plate include a sheet of inorganic glass and a sheet of organic glass. Examples of the inorganic glass include float plate glass, heat ray-absorbing plate glass, heat ray-reflecting plate glass, polished plate glass, figured glass, wire plate glass, lined plate glass, clear glass and clear glass, and the like. The organic glass is synthetic resin glass substituted for inorganic glass. Examples of the organic glass include a polycarbonate plate, a poly(meth)acrylic resin plate and the like. Examples of the poly(meth)acrylic resin plate include a polymethyl (meth)acrylate plate and the like.

Although the thickness of the component for laminated glass is not particularly limited, the thickness is preferably 1 mm or more, preferably 5 mm or less, and more preferably 3 mm or less. Moreover, in the case where the component for laminated glass is a glass plate, the thickness of the glass plate is preferably 1 mm or more, preferably 5 mm or less, and more preferably 3 mm or less. In the case where the component for laminated glass is a PET film, the thickness of the PET film is preferably 0.03 mm or more and preferably 0.5 mm or less.

The production method of the laminated glass is not particularly limited. For example, an interlayer film is sandwiched between the first and second components for laminated glass and the air remaining between each of the first and second components for laminated glass and the interlayer film is removed by allowing the laminated body to pass through a pressing roll or by putting the laminated body into a rubber bag and allowing them to be sucked under reduced pressure. Afterward, the laminated body is preliminarily bonded together at about 70 to 100°C to obtain a laminate. Next, by putting the laminate into an autoclave or by pressing the laminate, the laminate is press-bonded together at about 120 to 150°C and under a pressure of 1 to 1.5 MPa. In this way, laminated glass can be obtained.

The interlayer film and the laminated glass can be used for automobiles, railway vehicles, aircraft, ships, buildings and the like. It is preferred that the interlayer film be an interlayer film for construction or for vehicles, and it is more preferred that the interlayer film be an interlayer film for vehicles. It is preferred that the laminated glass be laminated glass for construction or for vehicles, and it is more preferred that the laminated glass be laminated glass for vehicles. The interlayer film and the laminated glass can also be used for applications other than these applications. The interlayer film and the laminated glass can be used for a windshield, side glass, clear glass or roof glass of an automobile and the like. Since the interlayer film and the laminated glass are high in heat shielding properties and high in visible light transmittance, they are suitably used for automobiles. Moreover, since the laminated glass using the interlayer film is high in light transmittance at a wavelength of 1550 nm and is capable of suppressing feeling of scorching hot caused by sunlight made incident through the laminated glass, the interlayer film and the laminated glass are suitably used for automobiles. Moreover, since the laminated glass using the interlayer film is high in light transmittance at a wavelength of 850 nm and is capable of enhancing detection accuracy of various sensors fitted to the laminated glass, the interlayer film and the laminated glass are suitably used for automobiles.

From the viewpoint of obtaining laminated glass further excellent in transparency, the visible light transmittance of laminated glass is preferably 65% or more, more preferably 70% or more. The visible light transmittance of laminated glass can be measured in accordance with JIS R3211 (1998). The visible light transmittance of laminated glass obtained by sandwiching the interlayer film for laminated glass according to the present invention between two sheets of green glass (heat ray-absorbing plate glass) with a thickness of 2 mm in accordance with JIS R3208 is preferably 70% or more.

The solar transmittance (Ts2100) of the laminated glass is preferably 65% or less, more preferably 65% or less, further preferably 50% or less, and especially preferably 40% or less. The solar transmittance (Ts2100) of laminated glass can be measured in accordance with JIS R3106 (1998). The solar transmittance Ts (Ts2100) of laminated glass obtained by sandwiching the interlayer film for laminated glass according to the present invention between two sheets of green glass with a thickness of 2 mm in accordance with JIS R3208 is preferably 65% or less, more preferably 60% or less, further preferably 50% or less, and especially preferably 40% or less.

From the viewpoint of effectively suppressing feeling of scorching hot, the light transmittance at a wavelength of 1550 nm (T1550) of the laminated glass is preferably 20% or less, more preferably 10% or less. The light transmittance at a wavelength of 1550 nm (T1550) of laminated glass obtained by sandwiching the interlayer film for laminated glass according to the present invention between two sheets of green glass with a thickness of 2 mm in accordance with JIS R3208 is preferably 20% or less, more preferably 10% or less. The light transmittance (T1550) can be measured in accordance with JIS R3106 (1998).

The light transmittance at a wavelength of 800 nm (T800) of the laminated glass is preferably 20% or more. The light transmittance at a wavelength of 800 nm (T800) of laminated glass obtained by sandwiching the interlayer film for laminated glass according to the present invention between two sheets of green glass with a thickness of 2 mm in accordance with JIS R3208 is preferably 20% or more. The light transmittance (T800) can be measured in accordance with JIS R3106 (1998).

The haze value of the laminated glass is preferably 2% or less, more preferably 1% or less, further preferably 0.5% or less, and especially preferably 0.4% or less. The haze value of laminated glass can be measured in accordance with JIS K6714.

Hereinafter, the present invention will be described in more detail with reference to examples. The present invention is not limited only to the following examples.

The following materials were used in examples and comparative examples.

### Thermoplastic resin:

"PVB1" (a polyvinyl butyral resin acetalized with n-butyl aldehyde, the average polymerization degree of 1700, the content ratio of the hydroxyl group of 30.5% by mole, the acetylation degree of 1% by mole, the butyralization degree of 68.5% by mole)

"PVB2" (a polyvinyl butyral resin acetalized with n-butyl aldehyde, the average polymerization degree of 2400, the content ratio of the hydroxyl group of 22% by mole, the acetylation degree of 13% by mole, the butyralization degree of 65% by mole)

In this connection, the content ratio of the hydroxyl group, the acetylation degree and the butyralization degree (the acetalization degree) of the polyvinyl butyral resin were measured by a method in accordance with ASTM D1396-92. In this connection, even in the cases of being measured according to JIS K6728 "Testing methods for polyvinyl butyral", numerical values are the same as those obtained by a method in accordance with ASTM D1396-92 were exhibited.

### Plasticizer:

3GO (triethylene glycol di-2-ethylhexanoate)

### Tin-doped indium oxide particles:

ITO particles (tin-doped indium oxide particles)

Tungsten oxide particles (heat shielding particles):
CWO particles (cesium-doped tungsten oxide particles (Cs_{0.33}WO₃))

### Compound X:

Phthalocyanine compound ("NIR-43V" available from YAMADA CHEMICAL CO.,LTD. which contains vanadium atoms as the central metal)

### Other ingredients:

Lanthanum hexaboride particles
Gallium-doped zinc oxide particles
Immonium compound ("CIR-RL" available from Japan Carlit Co.,Ltd.)

### Metal salt:

Metal salt A (bis(2-ethylbutyric acid)magnesium salt)

### Ultraviolet ray shielding agent:

Ultraviolet ray shielding agent 1 (2-(2'-hydroxy-3'-t-butyl-5-methylphenyl)-5-chlorobenzotria zole, "Tinuvin 326" available from BASF Japan Ltd., the maximum absorption wavelength on the longest wavelength side of 352 nm)

Ultraviolet ray shielding agent 2 (triazine-based ultraviolet ray shielding agent, "LA-F70" available from ADEKA CORPORATION, the maximum absorption wavelength on the longest wavelength side of 344 nm)

Ultraviolet ray shielding agent 3 (2,4-bis[2-hydroxy-4-butoxyphenyl]-6-(2,4-dibutoxyphenyl)-1 ,3,5-triazine, "T460" available from BASF Japan Ltd., the maximum absorption wavelength on the longest wavelength side of 346 nm)

Ultraviolet ray shielding agent 4 (2-ethyl-2'-ethoxy-oxyanilide, "Sanduvor VSU" available from Clariant Japan K.K., the maximum absorption wavelength on the longest wavelength side of 276 nm)

Ultraviolet ray shielding agent 5 (malonic acid[(4-methoxyphenyl)-methylene]-dimethyl ester, "Hostavin PR-25" available from Clariant Japan K.K., the maximum absorption wavelength on the longest wavelength side of 312 nm)

### Oxidation inhibitor:

Oxidation inhibitor (2,6-di-t-butyl-p-cresol (BHT))

### (Example 1)

### (1) Preparation of interlayer film

An ethanolic solution of 0.19% by weight containing bis(2-ethylbutyric acid)magnesium salt which is a metal salt so that the content thereof in 100% by weight of the resulting interlayer film becomes 0.067% by weight was prepared.

Forty parts by weight of triethylene glycol di-2-ethylhexanoate (3GO), CWO particles in an amount that the content thereof in 100% by weight of the resulting interlayer film becomes 0.035% by weight, ITO particles in an amount that the content thereof in 100% by weight of the resulting interlayer film becomes 0.14% by weight, a phthalocyanine compound in an amount that the content thereof in the resulting interlayer film becomes 0.004% by weight, and the whole amount of the above-mentioned ethanolic solution obtained were mixed. Furthermore, a phosphoric acid ester compound which is a dispersing agent was added, after which the contents were mixed with a horizontal micro bead mill to obtain a dispersion. In this connection, the content of the phosphoric acid ester compound was adjusted to be one-tenth of the sum of contents of CWO particles and ITO particles.

To 100 parts by weight of a polyvinyl butyral resin (PVB1), the whole amount of the dispersion obtained, an oxidation inhibitor (2, 6-di-t-butyl-p-cresol (BHT)) in an amount that the content thereof in 100% by weight of the resulting interlayer film becomes 0.14% by weight, Ultraviolet ray shielding agent 4 (2-ethyl-2'-ethoxy-oxyanilide, "Sanduvor VSU" available from Clariant Japan K.K., the maximum absorption wavelength of 276 nm) in an amount that the content thereof in the resulting interlayer film becomes 0.28% by weight, Ultraviolet ray shielding agent 5 (malonic acid[(4-methoxyphenyl)-methylene]-dimethyl ester, "Hostavin PR-25" available from Clariant Japan K.K., the maximum absorption wavelength on the longest wavelength side of 312 nm) in an amount that the content thereof in 100% by weight of the resulting interlayer film becomes 0.28% by weight, and Ultraviolet ray shielding agent 2 (triazine-based ultraviolet ray shielding agent, "LA-F70" available from ADEKA CORPORATION, the maximum absorption wavelength on the longest wavelength side of 352 nm) in an amount that the content thereof in 100% by weight of the resulting interlayer film becomes 0.43% by weight were added and thoroughly kneaded with a mixing roll to obtain a composition.

The composition obtained was extruded by an extruder to obtain a single-layered interlayer film with a thickness of 760 µm.

### (2) Preparation of Laminated glass A

The interlayer film obtained was cut into a size of 30 cm in longitudinal length by 30 cm in transversal length. Next, two sheets of green glass (30 cm in longitudinal length by 30 cm in transversal length by 2 mm in thickness) in accordance with JIS R3208 were prepared. The interlayer film obtained was sandwiched between the two sheets of green glass, held in place for 30 minutes at 90°C and pressed under vacuum with a vacuum laminator to obtain a laminate. With regard to the laminate, interlayer film portions protruded from the glass plate were cut away to obtain a sheet of Laminated glass A.

### (3) Preparation of Laminated glass B (for pummel value measurement)

A sheet of Laminated glass B which differs only in size from the sheet of Laminated glass A was prepared. That is, the interlayer film obtained was cut into a size of 100 cm in longitudinal length by 100 cm in transversal length. Next, two sheets of green glass (100 cm in longitudinal length by 100 cm in transversal length by 2 mm in thickness) in accordance with JIS R3208 were prepared. The interlayer film obtained was sandwiched between the two sheets of green glass, held in place for 30 minutes at 90°C and pressed under vacuum with a vacuum laminator to obtain a laminate. With regard to the laminate, interlayer film portions protruded from the glass plate were cut away to obtain a sheet of Laminated glass B.

### (Examples 2 to 10 and Comparative Examples 1 to 9)

A single-layered interlayer film was prepared in the same manner as that in Example 1 except that the kind of ingredients to be blended and the content thereof were set to those listed in the following Tables 1 and 2. With regard to the polyvinyl butyral resin and the plasticizer, the kind and blending amount thereof were set to be the same as those in Example 1. Using the interlayer film obtained, sheets of Laminated glass A and B, both of which are provided with the interlayer film, were prepared in the same manner as that in Example 1.

In this connection, in Comparative Example 7, at the time of blending the heat ray shielding agent, lanthanum hexaboride particles were blended so that the content thereof in the resulting interlayer film becomes 0.007% by weight. In Comparative Example 8, at the time of blending the heat ray shielding agent, gallium-doped zinc oxide particles were blended so that the content thereof in the resulting interlayer film becomes 0.120% by weight. In Comparative Example 9, at the time of blending the heat ray shielding agent, an immonium compound ("CIR-RL" available from Japan Carlit Co.,Ltd.) was blended so that the content thereof in the resulting interlayer film becomes 0.026% by weight.

### (Example 11)

### (1) Preparation of first composition for forming intermediate layer

To 100 parts by weight of a polyvinyl butyral resin (PVB2), 60 parts by weight of triethylene glycol di-2-ethylhexanoate which is a plasticizer was added and thoroughly kneaded with a mixing roll to obtain a first composition for forming an intermediate layer.

### (2) Preparation of second composition for forming surface layer

An ethanolic solution of 0.19% by weight containing bis(2-ethylbutyric acid)magnesium salt which is a metal salt so that the content thereof in 100% by weight of the resulting interlayer film becomes 0.067% by weight was prepared.

Forty parts by weight of triethylene glycol di-2-ethylhexanoate (3GO), CWO particles in an amount that the content thereof in 100% by weight of the resulting interlayer film becomes 0.026% by weight, ITO particles in an amount that the content thereof in 100% by weight of the resulting interlayer film becomes 0.127% by weight, a phthalocyanine compound in an amount that the content thereof in the resulting interlayer film becomes 0.007% by weight, and the whole amount of the above-mentioned ethanolic solution obtained were mixed. Furthermore, a phosphoric acid ester compound which is a dispersing agent was added, after which the contents were mixed with a horizontal micro bead mill to obtain a dispersion. In this connection, the content of the phosphoric acid ester compound was adjusted to be one-tenth of the sum of contents of CWO particles and ITO particles.

To 100 parts by weight of a polyvinyl butyral resin (PVB1), the whole amount of the dispersion obtained, an oxidation inhibitor (2,6-di-t-butyl-p-cresol (BHT)) in an amount that the content thereof in 100% by weight of the resulting interlayer film becomes 0.29% by weight, and Ultraviolet ray shielding agent 1 (2-(2'-hydroxy-3'-t-butyl-5-methylphenyl)-5-chlorobenzotria zole, "Tinuvin 326" available from BASF Japan Ltd., the maximum absorption wavelength on the longest wavelength side of 352 nm) in an amount that the content thereof in the resulting interlayer film becomes 0.57% by weight were added and thoroughly kneaded with a mixing roll to obtain a second composition for forming a surface layer.

### (3) Preparation of multi-layered interlayer film

The first composition obtained and the second composition obtained were molded using a coextruder to prepare a multi-layered interlayer film (800 µm in thickness) having a three-layered structure with a stack of a surface layer (350 µm) /an intermediate layer (100 µm in thickness) /a surface layer (350 µm in thickness) .

### (4) Preparation of Laminated glass A and Laminated glass B

Using the interlayer film obtained, sheets of Laminated glass A and B, both of which are provided with the interlayer film, were prepared in the same manner as that in Example 1.

### (Example 12)

### (1) Preparation of first composition for forming intermediate layer

Sixty parts by weight of triethylene glycol di-2-ethylhexanoate (3GO), CWO particles in an amount that the content thereof in 100% by weight of the resulting interlayer film becomes 0.091% by weight, ITO particles in an amount that the content thereof in 100% by weight of the resulting interlayer film becomes 0.889% by weight, and a phthalocyanine compound in an amount that the content thereof in the resulting interlayer film becomes 0.046% by weight were mixed. Furthermore, a phosphoric acid ester compound which is a dispersing agent was added, after which the contents were mixed with a horizontal micro bead mill to obtain a dispersion. In this connection, the content of the phosphoric acid ester compound was adjusted to be one-tenth of the sum of contents of CWO particles and ITO particles.

To 100 parts by weight of a polyvinyl butyral resin (PVB2), the whole amount of the dispersion obtained, an oxidation inhibitor (2, 6-di-t-butyl-p-cresol (BHT)) in an amount that the content thereof in 100% by weight of the resulting interlayer film becomes 0.29% by weight, and Ultraviolet ray shielding agent 1 (2-(2'-hydroxy-3'-t-butyl-5-methylphenyl)-5-chlorobenzotria zole, "Tinuvin 326" available from BASF Japan Ltd., the maximum absorption wavelength on the longest wavelength side of 352 nm) in an amount that the content thereof in the resulting interlayer film becomes 0.57% by weight were added and thoroughly kneaded with a mixing roll to obtain a first composition for forming an intermediate layer.

### (2) Preparation of second composition for forming surface layer

To 100 parts by weight of a polyvinyl butyral resin (PVB1), 40 parts by weight of triethylene glycol di-2-ethylhexanoate which is a plasticizer and 0.2 part by weight of Ultraviolet ray shielding agent 1 (2-(2'-hydroxy-3'-t-butyl-5-methylphenyl)-5-chlorobenzotria zole, "Tinuvin 326" available from BASF Japan Ltd., the maximum absorption wavelength on the longest wavelength side of 352 nm) were added and thoroughly kneaded with a mixing roll to obtain a second composition for forming a surface layer.

### (3) Preparation of multi-layered interlayer film

The first composition obtained and the second composition obtained were molded using a coextruder to prepare a multi-layered interlayer film (800 µm in thickness) having a three-layered structure with a stack of a surface layer (350 µm) /an intermediate layer (100 µm in thickness) /a surface layer (350 µm in thickness) .

### (4) Preparation of Laminated glass A and Laminated glass B

Using the interlayer film obtained, sheets of Laminated glass A and B, both of which are provided with the interlayer film, were prepared in the same manner as that in Example 1.

### (Evaluation)

### (1) Measurement of visible light transmittance (A-light Y-value, initial A-Y (380 to 780 nm))

The Laminated glass A obtained was measured for the visible light transmittance in the 380 to 780 nm wavelength range in accordance with JIS R3211 (1998) using a spectrophotometer ("U-4100" available from Hitachi High-Technologies Corporation).

### (2) Measurement of light transmittance (initial T850 (850 nm))

The Laminated glass A obtained was measured for the light transmittance at a wavelength of 850 nm (T850 (850 nm)) by a method in accordance with JIS R3106 (1998) using a spectrophotometer ("U-4100" available from Hitachi High-Technologies Corporation).

### (3) Measurement of solar transmittance (initial Ts2100 (300 to 2100 nm))

The solar transmittance Ts in the 300 to 2100 nm wavelength range (Ts2100) of the laminated glass obtained was determined in accordance with JIS R3106 (1998) using a spectrophotometer ("U-4100" available from Hitachi High-Technologies Corporation).

### (4) Light resistance (ΔA-Y, ΔT850 and ΔTs2100)

The laminated glass was irradiated with ultraviolet rays (quartz glass mercury lamp (750 W)) for 500 hours in accordance with JIS R3205 using an ultraviolet irradiation device ("Ci65A" available from Atlas Material Testing Technology LLC). The laminated glass after irradiated with ultraviolet rays for 500 hours was measured for A-Y, T850 and Ts2100 by the foregoing method.

From the measured values obtained, ΔA-Y (initial A-Y - A-Y after irradiated with ultraviolet rays), ΔT850 (initial T850 - T850 after irradiated with ultraviolet rays), and ΔTs2100 (initial Ts2100 - Ts2100 after irradiated with ultraviolet rays) were determined.

The results are shown in Tables 1 to 3. In this connection, "-" written in the evaluation columns of the following Tables 2 and 3 refers to being unevaluated. Moreover, in the following Tables 1 to 3, the content of each of ITO particles, CWO particles, a phthalocyanine compound, Metal salt A, an oxidation inhibitor and an ultraviolet ray shielding agent refers to the content thereof (% by weight) in 100% by weight of an interlayer film (Tables 1 and 2), in 100% by weight of a surface layer (Table 3) or in 100% by weight of an intermediate layer (Table 3), containing these ingredients. In this connection, in Examples 1 to 10, the concentration of magnesium derived from the Metal salt A in the interlayer film was determined to be 60 ppm. In Example 11, the concentration of magnesium derived from the Metal salt A in the surface layer was determined to be 60 ppm. Moreover, in the following Tables 1 to 3, the description of the content of each of a polyvinyl butyral resin and a plasticizer was omitted.

In this connection, the laminated glass of each of Examples 1 to 12 was measured for the light transmittance at a wavelength of 1550 nm (T1550), whereupon the light transmittance (T1550) was equal to or less than 20% in all of Examples 1 to 12. Moreover, it has been confirmed that even when triethylene glycol di-2-ethylhexanoate as a plasticizer used in Examples 1 to 12 is changed to tetraethylene glycol di-n-heptanoate, the same effect is obtained.

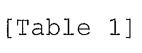

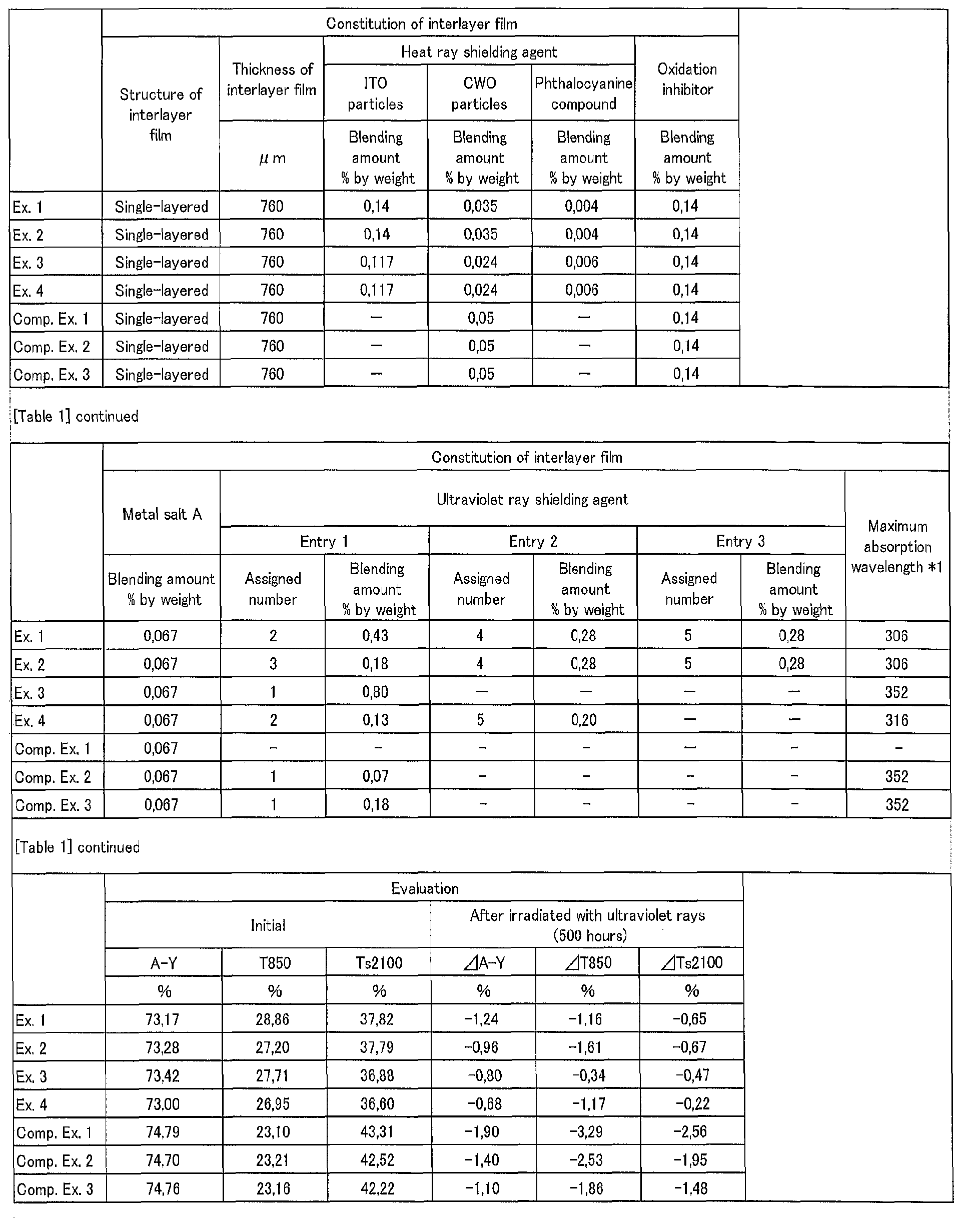

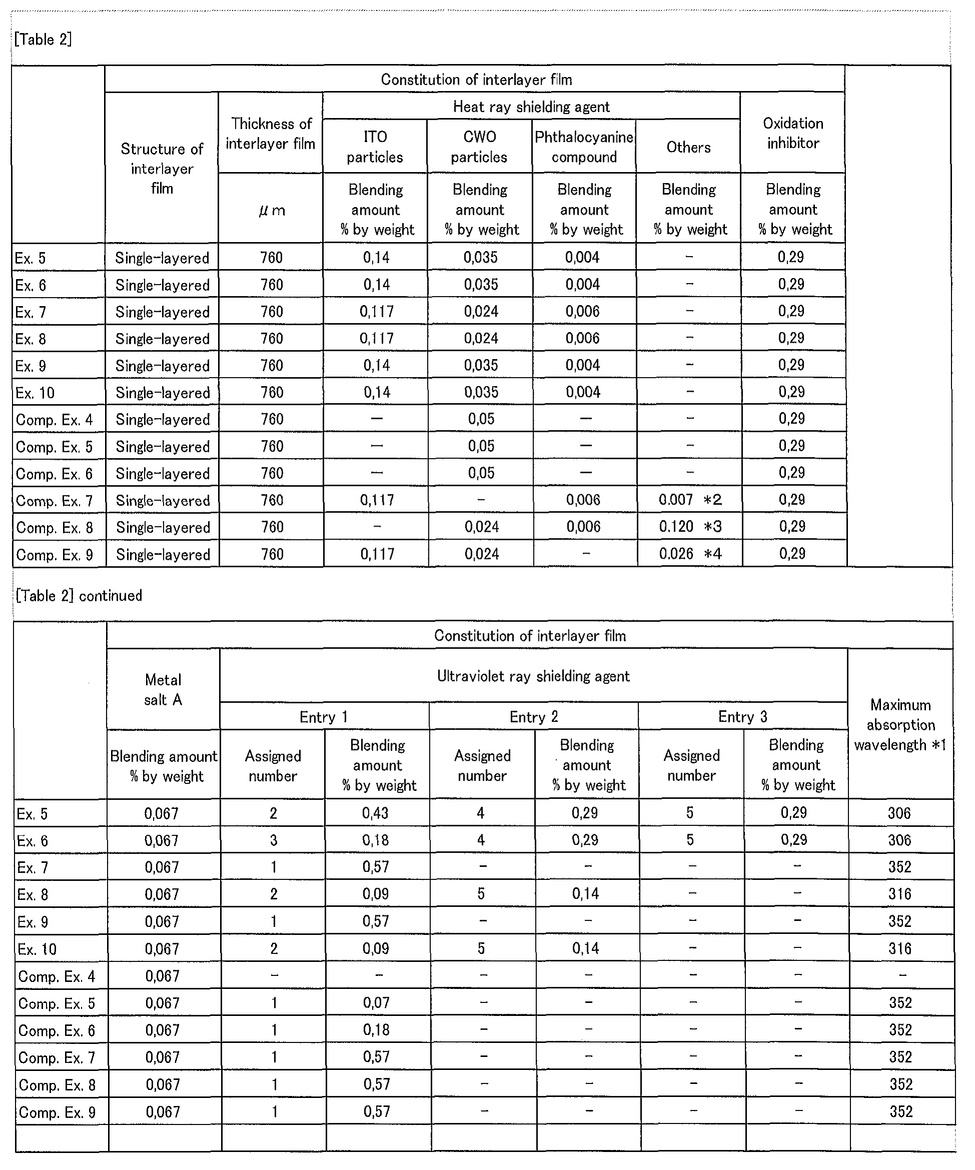

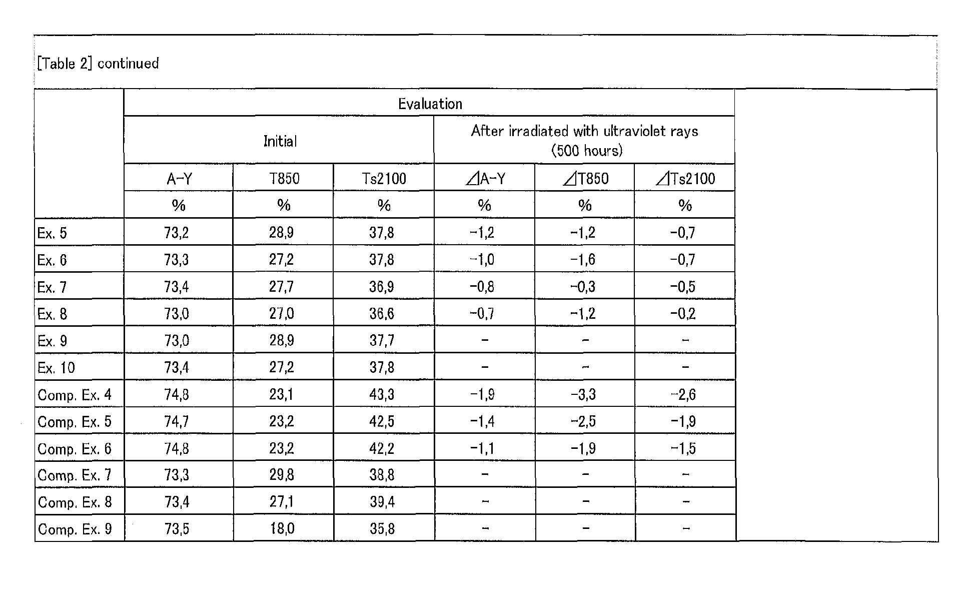

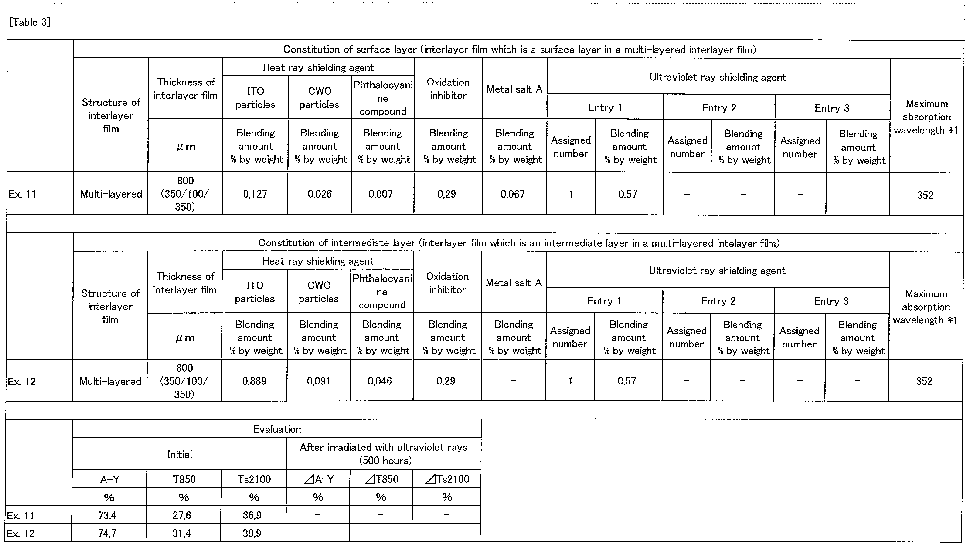

"*1" written in Tables 1 to 3 refers to the maximum absorption wavelength which has the highest absorbance in each of the interlayer film (Tables 1 and 2), the surface layer (Table 3) and the intermediate layer (Table 3). In Table 2, *2 refers to the amount of lanthanum hexaboride particles blended, *3 refers to the amount of gallium-doped zinc oxide particles blended, and *4 refers to the amount of an immonium compound ("CIR-RL" available from Japan Carlit Co.,Ltd.) blended.

### EXPLANATION OF SYMBOLS

- 1...: Laminated glass
- 2...: Interlayer film
- 2a...: First surface
- 2b...: Second surface
- 11...: Laminated glass
- 12...: Interlayer film
- 13...: First layer (first interlayer film)
- 14...: Second layer (second interlayer film)
- 15...: Third layer (third interlayer film)
- 13a...: Outer surface
- 15a...: Outer surface
- 21...: First component for laminated glass
- 22...: Second component for laminated glass

## Claims

1. (Amended) An interlayer film for laminated glass, comprising:
a thermoplastic resin,
tin-doped indium oxide particles,
tungsten oxide particles and
at least one kind of compound among a phthalocyanine compound, a naphthalocyanine compound and an anthracyanine compound,
wherein the tungsten oxide particles are cesium-doped tungsten oxide particles.

2. The interlayer film for laminated glass according to claim 1,
wherein the content of the tin-doped indium oxide particles is 0.0001% by weight or more and 1% by weight or less.

3. The interlayer film for laminated glass according to claim 1 or 2,
wherein the content of the tungsten oxide particles is 0.00001% by weight or more and 0.1% by weight or less.

4. The interlayer film for laminated glass according to any one of claims 1 to 3,
wherein the content of the compound which is at least one kind among a phthalocyanine compound, a naphthalocyanine compound and an anthracyanine compound is 0.000001% by weight or more and 0.05% by weight or less.

5. The interlayer film for laminated glass according to any one of claims 1 to 4,
wherein the compound which is at least one kind among a phthalocyanine compound, a naphthalocyanine compound and an anthracyanine compound is a phthalocyanine compound.

6. The interlayer film for laminated glass according to claim 5, wherein the compound which is at least one kind among a phthalocyanine compound, a naphthalocyanine compound and an anthracyanine compound is a phthalocyanine compound containing a vanadium atom.

7. The interlayer film for laminated glass according to any one of claims 1 to 4, 5 and 6, wherein the thermoplastic resin is a polyvinyl acetal resin.

8. The interlayer film for laminated glass according to any one of claims 1 to 4 and 5 to 7, further comprising a plasticizer.

9. The interlayer film for laminated glass according to any one of claims 1 to 4 and 5 to 8, further comprising an ultraviolet ray shielding agent.

10. The interlayer film for laminated glass according to any one of claims 1 to 4 and 5 to 9, further comprising at least one kind of metal salt among an alkali metal salt and an alkaline earth metal salt.

11. A laminated glass, comprising:
a first component for laminated glass,
a second component for laminated glass and
an interlayer film for laminated glass according to any one of claims 1 to 4 and 5 to 10,
wherein the interlayer film for laminated glass is interposed between the first component for laminated glass and the second component for laminated glass.

## Patentansprüche

1. Zwischenschichtfolie für Verbundglas, umfassend:
ein thermoplastisches Harz,
mit Zinn dotierte Indiumoxidteilchen,
Wolframoxidteilchen und
mindestens eine Art an Verbindung unter einer Phthalocyaninverbindung, einer Naphthalcyaninverbindung und Anthracyaninverindung,
wobei die Wolframoxidteilchen mit Cäsium dotierte Wolframoxidteilchen sind.

2. Zwischenschichtfolie für Verbundglas nach Anspruch 1, wobei der Gehalt der mit Zinn dotierten Indiumoxidteilchen 0,0001 Gew.-% oder mehr oder 1 Gew.-% beträgt.

3. Zwischenschichtfolie für Verbundglas nach Anspruch 1 oder 2, wobei der Gehalt der Wolframoxidteilchen 0,00001 Gew.-% oder mehr und 0,1 Gew.-% oder weniger beträgt.

4. Zwischenschichtfolie für Verbundglas nach irgendeinem der Ansprüche 1 bis 3, wobei der Gehalt der Verbindung, die mindestens eine Art aus einer Phthalocyaninverbindung, einer Naphthalocyaninverbinung und einer Anthracyaninverbindung ist, 0,000001 Gew.-% oder mehr und 0,05 Gew.-% oder weniger beträgt.

5. Zwischenschichtfolie für Verbundglas nach irgendeinem der Ansprüche 1 bis 4, wobei die Verbindung, welche mindestens eine Art aus einer Phthaocyaninvervindung, einer Naphthalocyaninverbinung und einer Anthracyaninverbindung ist, eine Phthalocyaninvervindung ist.

6. Zwischenschichtfolie für Verbundglas nach Anspruch 5, wobei die Verbindung, die mindestens eine Art aus einer Phthalocyaninverbindung, einer Naphthalocyaninverbinung und einer Anthracyaninverbindung ist, eine ein Vanadiumatom enthaltende Phthalocyaninverbinudng ist.

7. Zwischenschichtfolie für Verbundglas nach irgendeinem der Ansprüche 1 bis 4, 5 und 6, wobei das thermoplastische Harz ein Polyvinylacetalharz ist.

8. Zwischenschichtfolie für Verbundglas nach irgendeinem der Ansprüche 1 bis 4 und 5 bis 7, weiterhin umfassend einen Weichmacher.

9. Zwischenschichtfolie für Verbundglas nach irgendeinem der Ansprüche 1 bis 4 und 5 bis 8, weiterhin umfassend ein Ultraviolettstrahlen-Abschirmmittel.

10. Zwischenschichtfolie für Verbundglas nach irgendeinem der Ansprüche 1 bis 4 und 5 bis 9, weiterhin umfassend mindestens eine Art Metallsalz unter einem Alkalimetallsalz und einem Erdalkalimetallsalz.

11. Verbundglas, umfassend:
eine erste Komponente für Verbundglas,
eine zweite Komponente für Verbundglas und
eine Zwischenschichtfolie für Verbundglas nach irgendeinem der Ansprüche 1 bis 4 und 5 bis 10,
wobei die Zwischenschichtfolie für Verbundglas zwischen der ersten Komponente für Verbundglas und der zweiten Komponente für Verbundglas eingefügt ist.

## Revendications

1. Film intercouche pour verre feuilleté, comprenant :
une résine thermoplastique, des particules d'oxyde d'indium dopé à l'étain, des particules d'oxyde de tungstène et au moins un type de composé parmi un composé de phtalocyanine,
un composé de naphtalocyanine et un composé d'anthracyanine, les particules d'oxyde de tungstène étant des particules d'oxyde de tungstène dopé au césium.

2. Film intercouche pour verre feuilleté selon la revendication 1, dans lequel la teneur en particules d'oxyde d'indium dopé à l'étain est comprise entre 0,0001 % en poids et 1 % en poids.

3. Film intercouche pour verre feuilleté selon la revendication 1 ou 2, la teneur en particules d'oxyde de tungstène étant comprise entre 0,00001 % en poids et 0,1 % en poids.

4. Film intercouche pour verre feuilleté selon l'une quelconque des revendications 1 à 3, la teneur en composé qui est au moins un type de composé parmi un composé de phtalocyanine, un composé de naphtalocyanine et un composé d'anthracyanine étant comprise entre 0,000001 % en poids et 0,05 % en poids.

5. Film intercouche pour verre feuilleté selon l'une quelconque des revendications 1 à 4, le composé qui est au moins un type de composé parmi un composé de phtalocyanine, un composé de naphtalocyanine et un composé d'anthracyanine étant un composé de phtalocyanine.

6. Film intercouche pour verre feuilleté selon la revendication 5, le composé qui est au moins un type de composé parmi un composé de phtalocyanine, un composé de naphtalocyanine et un composé d'anthracyanine étant un composé de phtalocyanine contenant un atome de vanadium.

7. Film intercouche pour verre feuilleté selon l'une quelconque des revendications 1 à 4, 5 et 6, la résine thermoplastique étant une résine de poly(acétal de vinyle).

8. Film intercouche pour verre feuilleté selon l'une quelconque des revendications 1 à 4 et 5 à 7, comprenant en outre un plastifiant.

9. Film intercouche pour verre feuilleté selon l'une quelconque des revendications 1 à 4 et 5 à 8, comprenant en outre un agent de protection contre les rayonnements ultraviolets.

10. Film intercouche pour verre feuilleté selon l'une quelconque des revendications 1 à 4 et 5 à 9, comprenant en outre au moins un type de sel métallique parmi un sel métallique alcalin et un sel métallique alcalino-terreux.

11. Verre feuilleté comprenant :
un premier composant pour verre feuilleté, un second composant pour verre feuilleté et un film intercouche pour verre feuilleté selon l'une quelconque des revendications 1 à 4 et 5 à 10, le film intercouche pour verre feuilleté étant interposé entre le premier composant pour verre feuilleté et le second composant pour verre feuilleté.
